# EUROPÄISCHE PATENTSCHRIFT

(11) **EP 4 396 466 B1**
(45) Veröffentlichungstag und Bekanntmachung des Hinweises auf die Patenterteilung: **04.03.2026**
(21) Anmeldenummer: 22750994.0
(22) Anmeldetag: 21.07.2022
(51) Int. Cl.: F16B 5/02, F16B 37/04, F16B 43/00, H01Q 1/12, H01Q 1/32

(54) **BEFESTIGUNGSANORDNUNG EINES GERÄTEGEHÄUSES EINES GERÄTS AN EINEM FAHRZEUGBLECH EINES KRAFTFAHRZEUGS SOWIE KRAFTFAHRZEUG UND GERÄT**
FASTENING ARRANGEMENT FOR FASTENING A DEVICE HOUSING OF A DEVICE TO A VEHICLE PANEL OF A MOTOR VEHICLE, AND MOTOR VEHICLE AND DEVICE
AGENCEMENT DE FIXATION D'UN BOÎTIER D'APPAREIL D'UN APPAREIL SUR UNE TÔLE DE VÉHICULE D'UN VÉHICULE À MOTEUR AINSI QUE VÉHICULE À MOTEUR ET APPAREIL

(30) Priorität: 31.08.2021 DE 102021209572; 21.10.2021 DE 102021211866
(43) Veröffentlichungstag der Anmeldung: 10.07.2024
(73) Patentinhaber: AUMOVIO Germany GmbH, 60488 Frankfurt am Main (DE)
(72) Erfinder: FLADERER, Florian, 31137 Hildesheim (DE); GERBL, Sebastian, 31137 Hildesheim (DE); HILDEBRAND, Rudolf, 31137 Hildesheim (DE)
(74) Vertreter: Aumovio Corporation
(86) Internationale Anmeldenummer: PCT/DE2022/200164
(87) Internationale Veröffentlichungsnummer: WO 2023/030585

(56) Entgegenhaltungen:
- EP-A1- 1 748 513
- EP-B1- 1 484 830
- DE-A1- 102008 044 014
- DE-A1- 102010 019 383
- DE-A1- 102011 011 072
- DE-A1- 19 900 267
- US-A1- 2020 259 241

## Beschreibung

Die Erfindung betrifft eine Befestigungsanordnung eines Gerätegehäuses eines Geräts oder Moduls an einem Fahrzeugblech eines Kraftfahrzeugs. Ein Gerätegehäuse des Geräts liegt hierbei auf einer ersten Seite des Fahrzeugblechs an (z.B. an der Außenseite) und ein Montagefortsatz des Geräts ist durch eine Montageöffnung des Fahrzeugblechs gesteckt und eine Befestigungsschraube ist derart angezogen, dass sie ein Gegenelement im Montagefortsatz gegen eine der ersten Seite des Fahrzeugblechs gegenüberliegende zweite Seite des Fahrzeugblechs zieht (z.B. gegen die Innenseite des Fahrzeugblechs).

Befestigungsanordnungen sind bekannt aus DE 10 2011 011072 A1, DE 10 2010 019383 A1, EP 1 748 512 A1 und DE 10 2008 044014 A1.

An einem Fahrzeugblech eines Kraftfahrzeugs, beispielsweise dem Außenblech oder der sogenannten Außenhaut, kann bei der Montage des Kraftfahrzeugs ein Gerät befestigt werden, das damit durch das Fahrzeugblech getragen oder gehalten ist. Beispiele für solche Geräte sind ein Antennenmodul, beispielsweise ein Dachantennenmodul, ein Seitenblinker, ein Wischermotor eines Scheibenwischers. Die Montage eines solchen Geräts an einem Fahrzeugblech sollte mit wenigen Handgriffen und schnell erfolgen können, um die Produktion des Kraftfahrzeugs kostengünstig gestalten zu können. Zudem sollten die verwendeten Komponenten kostengünstig bereitstellbar sein. Für eine einseitige Montage kann daher vorgesehen sein, dass in dem Fahrzeugblech eine Montageöffnung oder Durchgangsöffnung vorgesehen ist, durch welche hindurch ein Teil des Geräts gesteckt werden kann, damit das Gerätegehäuse auf einer Seite des Fahrzeugblechs anliegt und der durchgesteckte andere Teil des Geräts von der gegenüberliegenden Seite her eine Halterung für das Gerät am Fahrzeugblech bildet. Dieser durch die Montageöffnung hindurchgesteckte Teil des Geräts ist hier als "Montagefortsatz" bezeichnet. Die Montage kann vorsehen, dass der Montagefortsatz durch die Montageöffnung gesteckt wird und dann eine Befestigungsschraube angezogen wird, wodurch im Montagefortsatz ein Gegenelement, beispielsweise eine Platte, ausgerichtet wird und (aus Sicht des Gerätegehäuses) hinter der Montageöffnung einen Halt oder Formschluss am Fahrzeugblech mit dem Rand der Montageöffnung bildet.

Module oder Geräte mit Gerätegehäusen aus Kunststoff und insbesondere mit innenliegender PCBA (printed circuit board assembly), speziell in der Anwendung als Verstärker/Filter/Sperrkreise in Fahrzeug (Scheiben-) Antennensystemen, werden häufig aus Kostengründen ohne spezielle strukturelle Unterstützungselemente zur Versteifung und/oder nicht mit Metallgehäuse gefertigt. Dabei wird oftmals zur optimierten elektrischen Masseanbindung der PCBA (printed circuit board assembly) an das Fahrzeug die Leiterplatte zudem elektrisch direkt über die Befestigungsschraube kontaktiert, mittels welcher das Gerätegehäuse an das Fahrzeugblech montiert wird. Die geforderten, oftmals hohen Anziehdrehmomente werden daher direkt auf das PCBA und den Kunststoff des Gerätegehäuses übertragen. Das führt zu oftmals unzulässiger Krafteinleitung auf die betroffenen Komponenten (speziell PCBA und Gerätegehäuse).

Bei eine dabei eventuell entstehenden zu hohen Flächenpressung durch das geforderte Anziehdrehmoment in der Montage werden der Kunststoff des Gerätegehäuses und auch die PCBA unzulässig verformt. Eine Zerstörung oder ein Ablösen oder Bruch von elektronischen Bauelementen durch unzulässige große mechanische Spannungen auf das Gerätegehäuse sind die Folge. Bei der Montage eines Kraftfahrzeugs können für andere Komponenten 4Nm (400kg) Akku-Schrauber verwendet werden, was die Gefahr birgt, dass diese von Monteuren auch für Antennenmodule oder ein andere Gerät am Fahrzeugblech verwendet werden, so dass es eine Leiterplatte (PCB - printed circuit board) und/oder ein Kunststoffgehäuseteil des Gerätegehäuses in die Montageöffnung des Fahrzeugblechs (z.B. eine Dachöffnung) hinein zieht und deformiert.

Der Erfindung liegt die Aufgabe zugrunde, mechanische Spannungen in einem Gerätegehäuse aus Kunststoff in der oben beschriebenen Befestigungsanordnung zu reduzieren und damit Defekte / Beschädigungen durch ein hohes Anziehdrehmoment zu vermeiden.

Die Aufgabe wird durch die Gegenstände der unabhängigen Patentansprüche gelöst. Vorteilhafte Weiterbildungen der Erfindung sind durch die abhängigen Ansprüche, die folgende Beschreibung sowie die Figuren beschrieben.

Als eine Lösung umfasst die Erfindung eine Befestigungsanordnung eines Gerätegehäuses eines Geräts oder Moduls an einem Fahrzeugblech eines Kraftfahrzeugs, wobei das Gerätegehäuse auf einer ersten Seite des Fahrzeugblechs anliegt und ein Montagefortsatz des Geräts durch eine Montageöffnung des Fahrzeugblechs (entlang einer Einsteckrichtung) eingesteckt ist und eine aus dem Gerätegehäuse in den Montagefortsatz hineinragende Befestigungsschraube angezogen ist und hierdurch ein in dem Montagefortsatz angeordnetes Gegenelement gegen eine der ersten Seite gegenüberliegende zweite Seite des Fahrzeugblechs zieht. Das Gegenelement selbst kann hierzu beispielsweise ein Gewindeloch mit einem Gewinde aufweisen, in welches die Befestigungsschraube gedreht ist. Durch Drehen oder Anziehen der Befestigungsschraube wird das Gegenelement zu der zweiten Seite des Fahrzeugblechs hin gezogen und kann einen Formschluss mit dem Rand der Montageöffnung bilden, also mit dem Fahrzeugblech. Alternativ dazu kann das Gegenelement eine Bohrung oder Durchgangsöffnung aufweisen, durch welche hindurch die Befestigungsschraube gesteckt ist, und eine Mutter der Befestigungsschraube kann das Gegenelement in Richtung zum Fahrzeugblech drücken.

Die durch die angezogene Befestigungsschraube wirkende Kraft zwischen Schraubenkopf (im Gerätegehäuse auf der ersten Seite des Fahrzeugblechs) und dem Gegenelement (auf der anderen Seite des Fahrzeugblechs) wirkt vom Schraubenkopf her auch auf eine Gehäusewandung des Gerätegehäuses, auf welcher der Schraubenkopf direkt oder direkt aufliegt oder gestützt ist. Somit kann über den Schraubenkopf eine Kraft in die Gehäusewandung des Gerätegehäuses übertragen werden und hierdurch das Gerätegehäuse in die Montageöffnung durch Verformung hineingezogen werden oder zur Montageöffnung hingezogen werden. Die Montageöffnung lässt sich in der Regel nicht verkleinern, da durch sie hindurch der Montagefortsatz gesteckt werden muss, der das Gegenelement enthält. Vorteil der Verwendung des Montagefortsatzes ist, dass bei der Montage einseitig, das heißt nur von der ersten Seite her, gearbeitet oder montiert werden muss, da sich das Gerätegehäuse auf die Montageöffnung aufsetzen lässt, hierbei der Montagefortsatz mit dem Gegenelement durch die Montageöffnung hindurchgesteckt werden kann und dann durch Anziehen der Befestigungsschraube von der ersten Seite her auch die Ausrichtung und das Anziehen des Gegenelements zur zweiten Seite des Fahrzeugblechs hin bewerkstelligt oder durchgeführt werden kann. Durch die hierdurch notwendige Größe der Montageöffnung ergibt sich aber eine entsprechend geringe Stützung der Gehäusewandung des Gerätegehäuses, wenn der Schraubenkopf gegen die Gehäusewandung drückt, weil der Schraubenkopf einen geringeren Durchmesser als die Montageöffnung haben kann. Insbesondere bei den eingangs beschriebenen Kräften im Bereich größer als 3 Nm.

Um dennoch bei der Gehäusewandung des Gehäuses eine Verformung, wie sie durch den Anpressdruck des Schraubenkopfes der Befestigungsschraube verursacht werden kann, zu vermeiden, ist vorgesehen, dass in dem Gerätegehäuse ein Stützelement bereitgestellt ist, das entlang zumindest einer Raumrichtung parallel zu einer Blechoberfläche des Fahrzeugblechs eine Außenabmessung aufweist, die größer als ein Innendurchmesser der Montageöffnung oder gleich dem Innendurchmesser oder um höchstens 20 Prozent kleiner als der Innendurchmesser in derselben Raumrichtung ist, und damit das Stützelement eine von einem Schraubenkopf der Befestigungsschraube durch das Anziehen ausgeübte Kraft über das Stützelement durch eine Gehäusewandung des Gerätegehäuses hindurch auf das Fahrzeugblech überträgt und insbesondere somit Verformungen am Gerätegehäuse und/oder an einem darin angeordneten PCB verhindert oder zumindest verringert, um Beschädigungen durch die eingebrachte Schraubkraft (Kraft der Befestigungsschraube) zu vermeiden. Mit anderen Worten ist das Stützelement senkrecht zur Einsteckrichtung (entlang welcher der Montagefortsatz in die Montageöffnung eingesteckt worden ist) in zumindest eine Raumrichtung breiter oder größer als die Montageöffnung selbst, sodass das Stützelement auf einem Rand der Montageöffnung aufliegt (mit der zwischen Stützelement und Fahrzeugblech angeordneten Gehäusewandung dazwischen). Bevorzugt liegt das Stützelement über der Montageöffnung in einem Bereich von mindestens 40% der Kontur der Montageöffnung auf oder es überragt die Montageöffnung in alle Richtungen, was eine Kraftverteilung verbessert. Das Stützelement kann beispielsweise als eine Platte oder als eine Scheibe ausgestaltet sein. Das Stützelement kann beispielsweise eine Bohrung oder Durchgangsöffnung aufweisen, durch welche hindurch die Befestigungsschraube gesteckt ist, sodass der Schraubenkopf auf das Stützelement drückt oder darauf aufliegt und die Kraft oder den Anpressdruck auf das Stützelement übertragen kann und das Stützelement die Kraft oder den Anpressdruck (anstelle der Gehäusewandung) zur Seite hin, das heißt quer zur Einsteckrichtung, zum Rand der Montageöffnung hin verteilt oder ableitet. Es hat sich aber zur Erzielung eines Vorteils auch als ausreichend erweisen, wenn der Außenabmessung gleich dem Innendurchmesser oder um höchstens 20 Prozent kleiner als der Innendurchmesser ist. Im letzteren Fall beträgt dann die Außenabmessung des Stützelements also mindestens 80 Prozent des Innendurchmessers. Dies ist immer noch ausreichend, weil die Gehäusewandung des Gerätegehäuses über die resultierende kurze Strecke zwischen dem Stützelement und dem Rand des Montageloches ausreichend stabil ist, um die Kraft zu übertragen, ohne dadurch beschädigt und/oder signifikant verformt zu werden. Dies ist insbesondere gegeben, wenn die Befestigungsschraube mit einem Drehmoment von weniger als 6 Newtonmeter angezogen ist.

Durch die Erfindung ergibt sich der Vorteil, dass unabhängig von einer Festigkeit einer Gehäusewandung und damit unabhängig von einer Materialwahl der Gehäusewandung durch Bereitstellen des Stützelements festgelegt oder erreicht werden kann, dass die von dem Schraubenkopf ausgehende Kraft über das Stützelement zum Rand der Montageöffnung hin, also zum Fahrzeugblech hin, geleitet oder geführt werden kann. Damit muss nicht das Material der Gehäusewandung selbst in der Lage sein, die Kraft verformungsfrei auf das Fahrzeugblech hin und damit quer zur Einsteckrichtung übertragen zu können. Die Erfindung umfasst auch Weiterbildungen, durch die sich zusätzliche Vorteile ergeben.

Erfindungsgemäß weist das Stützelement eine Krümmung oder Wölbung auf und das Stützelement weist eine Formkodierung auf, die zu einer Form einer Einfassungseinrichtung des Gehäuses korrespondiert, in welcher das Stützelement eingelegt ist, und eine durch die Krümmung bewirkte Wölbung des Stützelements von dem Fahrzeugblech weg weist. Die besagte Krümmung oder Wölbung kann sich beispielsweise dadurch ergeben, dass die besagte Durchgangsöffnung oder Bohrung in das Stützelement mittels eines Bohrers gebohrt wird und hierdurch das Stützelement eingedrückt wird und dann nicht mehr beispielsweise eine perfekt ebene Platte oder Scheiben darstellt, sondern die Ränder des Stützelements in Bezug auf die Mitte beispielsweise angehoben sind, beispielsweise um mehr als ein Zehntel Millimeter, aber in der Regel weniger als fünf Zehntel Millimeter. Mit anderen Worten kann das Stützelement durch die Krümmung oder Wölbung die Form einer Tellerfeder aufweisen. Obwohl dies produktionsbedingt sein kann, beispielsweise durch das besagte Bohren und/oder durch das Ausstanzen des Stützelements aus einem Blech, kann dies vorteilhaft genutzt werden, indem durch die Formkodierung sichergestellt ist, dass das Stützelement mit seiner Krümmung oder Wölbung im Gerätegehäuse in der Einfassung oder der Einfassungseinrichtung derart ausgerichtet ist, dass das Stützelement als Tellerfeder wirkt, also der Schraubenkopf auf dem höchsten Punkt der Krümmung aufliegt und der Rand des Stützelements auf der Gehäusewandung aufliegt. Die Einfassungseinrichtung kann beispielsweise bei einem Gerätegehäuse aus Kunststoff mittels eines Spritzgussverfahrens ausgeformt sein. Es kann sich beispielsweise um einen Rahmen und/oder Anschlagselemente (wie z.B. Noppen oder Stege) handeln, dessen Kontur der durch die Formkodierung vorgegebenen Kontur entspricht. Ein Beispiel für eine Formkodierung kann sein, dass das Stützelement als runde Scheibe mit einem Fortsatz in eine Richtung, beispielsweise einer Ecke, ausgestaltet ist. Allgemein ist durch die Formkodierung eine Rotationssymmetrie und/oder eine Spiegelsymmetrie in der Kontur des Stützelements verhindert. Insbesondere ist verhindert, dass das Stützelement sowohl mit einer Seite also auch umgedreht mit der anderen Seite in die Einfassungseinrichtung passt. Durch die Verwendung der Formkodierung kann nach dem sogenannten Poka-Yoke-Prinzip sichergestellt werden, dass ein Monteur das Stützelement mit der richtigen räumlichen Orientierung in die Einfassungseinrichtung einlegt, um den Effekt der Tellerfeder zu erhalten, selbst wenn die Krümmung mit dem bloßen Auge nicht wahrnehmbar sein sollte. Somit kann selbst eine produktionsbedingte und damit ungeplante Krümmung oder Wölbung des Stützelements vorteilhaft genutzt werden.

Eine Weiterbildung umfasst, dass das Stützelement aus einem Material gefertigt ist, das härter und/oder steifer ist als ein Material der Gehäusewandung, wobei das Stützelement (als Einlegeelement oder Einlegescheibe) zwischen dem Schraubenkopf und der Gehäusewandung angeordnet ist und hierzu eine Durchgangsöffnung aufweist, durch welche hindurch ein Schraubenbolzen oder Schraubenschaft oder Gewindeschaft der Befestigungsschraube gesteckt ist. Als Material hat sich insbesondere ein Stahl (verschiedene Edelstähle sind hier vom Fachmann wählbar, auch getemperte Stähle) als vorteilhaft erwiesen, bevorzugt mit einer Festigkeit zwischen 500MPa - 1200MPa. Indem das Material des Stützelements unabhängig vom Material der Gehäusewandung gewählt werden kann, kann die Gehäusewandung für eine andere Anwendung, beispielsweise Dichtigkeit und/oder Herstellungskosten, optimiert werden und dennoch mittels des Stützelements ein ausreichend hartes und/oder steifes Material für das Ableiten der Kraft vom Schraubenkopf in das Fahrzeugblech bereitgestellt werden. Das Gerätegehäuse kann allgemein beispielsweise als Material einen Kunststoff, beispielsweise ein Polycarbonat, aufweisen. Das Gerätegehäuse kann beispielsweise mittels eines Spritzgussverfahrens hergestellt sein.

Eine Weiterbildung umfasst, dass an dem Gegenelement zumindest ein Dorn ausgebildet ist, der auf der zweiten Seite des Fahrzeugblechs in einen Lack des Fahrzeugblechs und/oder in ein Metall des Fahrzeugblechs an einer jeweiligen Einstichstelle hineingedrückt ist, wobei das Stützelement sich auf der ersten Seite des Fahrzeugblechs gegenüber der jeweiligen Einstichstelle erstreckt und damit das Fahrzeugblech an der jeweiligen Einstichstelle Das Gegenelement kann allgemein beispielsweise als eine Scheiben oder Platte ausgestaltet sein. Beim Anziehen der Befestigungsschraube wird das Gegenelement durch diese gegen die zweite Seite des Fahrzeugblechs, also beispielsweise eine Innenseite des Fahrzeugblechs, gezogen. Die hierbei von dem Gegenelement auf das Fahrzeugblech wirkende Kraft kann dazu genutzt werden, zumindest einen, z.B. zwei oder drei oder vier, Dornen, die an dem Gegenelement ausgebildet sind, in das Fahrzeugblech zu drücken, also beispielsweise durch dessen Lackierung oder Lack und/oder in das Metall des Fahrzeugblechs. Hierdurch kann eine elektrische Verbindung von einer elektrischen Komponente des Geräts, beispielsweise einer Leiterplatte, über die Befestigungsschraube und das Gegenelement zum Fahrzeugblech hergestellt oder bereitgestellt werden. Das Gegenelement selbst ist hierzu bevorzugt aus einem elektrisch leitenden Material, z.B. einem Metall, insbesondere Stahl, gebildet. Neben der Wahl des Materials kann ein Vorteil durch eine Beschichtung erreicht werden, z.B. ZN-NI (Zink-Nickel), was insbesondere einen Korrosionsschutz bei der elektrischen Anbindung an das Fahrzeugblech sicherstellt. Da an der jeweiligen Einstichstelle eines Dorns eine entsprechende mechanische Spannung von dem Dorn auf das Fahrzeugblech wirkt, kann durch ein entsprechend breites oder großes Stützelement auf der gegenüberliegenden ersten Seite des Fahrzeugblechs sichergestellt werden, dass sich auf der ersten Seite des Fahrzeugblechs gegenüber der jeweiligen Einstichstelle durch das Stützelement eine mechanische Abstützung für das Fahrzeugblech ergibt, sodass vermieden ist, dass das Fahrzeugblech hin zur ersten Seite, beispielsweise der Außenseite des Fahrzeugblechs, ausgebeult wird. Ein Dorn am Gegenelement kann beispielsweise als Fortsatz oder Spitze oder Kralle ausgestaltet sein, der beispielsweise durch Umbiegen einer Ecke oder Spitze des Gegenelements gebildet sein kann.

Bisher wurde das Stützelement als Platte oder Scheibe beschrieben. Das Stützelement kann aber auch eine zusätzliche dreidimensionale Struktur aufweisen, um die Ableitung der Kraft vom Schraubenkopf hin zum Fahrzeugblech zu unterstützen.

Eine Weiterbildung umfasst, dass an zumindest einer Kante des Stützelements eine Lasche ausgebildet ist, die durch einen jeweiligen Schlitz in der Gehäusewandung gesteckt ist und unmittelbar auf dem Fahrzeugblech aufliegt. Das Stützelement kann sich somit über die Lasche direkt am Fahrzeugblech abstützen und muss nicht auf dem Material der Gehäusewandung aufliegen oder über die Gehäusewandung die Kraft auf das Fahrzeugblech übertragen. Hierdurch wird vermieden, dass die Gehäusewandung zwischen dem Stützelement und dem Fahrzeugblech gequetscht wird. Die jeweilige Lasche kann insbesondere in der Weise ausgerichtet oder angeordnet sein, dass die Lasche insbesondere gegenüber zumindest einer Einstichstelle eines jeweiligen Dorns, wie sie bereits beschrieben wurde, aufliegt. Mit anderen Worten drückt jeweils ein Dorn auf der zweiten Seite des Fahrzeugblechs dort in eine Einstichstelle, die auf der gegenüberliegenden ersten Seite des Fahrzeugblechs eine Auflagefläche oder Auflagebereich für eine Lasche des Stützelements darstellt.

Eine Weiterbildung umfasst, dass an zumindest einer Kante des Stützelements ein Kragen ausgebildet ist, der durch Umbiegen eines Rands des Stützelements gebildet ist. Ein Kragen oder eine aufgerichtete oder gebogene Kante kann beispielsweise durch Tiefziehen des Stützelements erreicht oder gebildet werden. Indem das Stützelement nicht als flache Scheibe oder Platte ausgestaltet ist, sondern zumindest eine Kante, insbesondere zwei Kanten oder alle Kanten des Stützelements, in Bezug auf die Plattenebene aufgerichtet oder gebogen oder gebördelt sind, wird die Biegesteifigkeit des Stützelements im Vergleich zu einer Ausgestaltung als Platte oder Scheibe, vergrößert.

Eine Weiterbildung umfasst, dass das Stützelement am Schraubenkopf befestigt ist. Beispielsweise kann ein Schraubenkopf bereitgestellt werden, bei welchem das Stützelement als Scheibe bereitgestellt ist, beispielsweise angepresst ist, also mittels Presssitz auf den Schraubenschaft der Befestigungsschraube aufgesteckt ist. Mit anderen Worten ist hier der Schraubenkopf derart im Durchmesser vergrößert, dass er eine Abmessung aufweist, die größer als der Innendurchmesser der Montageöffnung ist. Die Scheibenform des Stützelements kann rund oder rechteckig sein. Alternativ dazu kann das Stützelement in das Gerätegehäuse eingelegt sein, z.B. in die beschriebene Einfassungseinrichtung.

Eine Weiterbildung umfasst, dass durch den Schraubenkopf und/oder durch das Stützelement eine Leiterplatte, PCB, einer elektrischen Schaltung des Geräts in dem Gerätegehäuse gehalten ist. Mit anderen Worten wird mittels der Befestigungsschraube auch eine Leiterplatte einer PCBA einer elektrischen Schaltung gehalten. Die Leiterplatte ist hierbei davor geschützt, durch das Anziehen der Befestigungsschraube in Richtung zur Montageöffnung hin eingedrückt oder verformt zu werden, da die von dem Schraubenkopf ausgehende Kraft beispielsweise durch die Leiterplatte hindurch oder direkt in das Fahrzeugblech am Rand der Montageöffnung abgeleitet werden kann. Mit anderen Worten stützt das Stützelement in diesem Fall auch die Leiterplatte gegen eine Verformung.

Der Montagefortsatz mit dem darin bereitgestellten Gegenelement muss zwei Bedingungen erfüllen. Zum einen muss er durch die Montageöffnung passen, zum anderen muss während des Anziehens der Befestigungsschraube das Gegenelement in Bezug auf die Montageöffnung derart ausgerichtet werden, dass das Gegenelement am Rand der Montageöffnung anliegt, also nicht mehr aus der Montageöffnung herausgezogen werden kann.

Eine Weiterbildung umfasst, dass die Montageöffnung ein längliche Form mit einer Längsabmessung und einer bezüglich der Längsabmessung kleineren Querabmessung aufweist (z.B. eine Rechteckform) und das Gegenelement kürzer als Längsabmessung oder eine Diagonale der länglichen Form und länger als die Querabmessung ist und in dem Montagefortsatz um einen Rotationswinkel in einem Bereich von 40° bis 140° drehbar gelagert ist, wobei sich eine Drehlage durch Anziehen der Befestigungsschraube verändert, sodass das Gegenelement durch das Anziehen seitlich aus Seitenwandungen des Montagefortsatzes gedreht ist und an einem Anschlag des Montagefortsatzes anliegt. Insbesondere ist der Montagefortsatz dazu eingerichtet, dass sich bei einer Montage des Geräts am Fahrzeugblech eine Drehlage des Gegenelements ausgehend von einer Montagestellung durch Anziehen der Befestigungsschraube verändert, sodass ein Teil des Gegenelements durch das Anziehen seitlich aus Seitenwandungen des Montagefortsatzes heraus in eine Haltestellung gedreht ist und an einem Anschlag des Montagefortsatzes anliegt. Mit anderen Worten ist das Gegenelement beim Einstecken des Montagefortsatzes in diesem entlang der Längsabmessung oder Längsrichtung der Montageöffnung ausgerichtet, sodass das Gegenelement durch die Montageöffnung hindurch zur zweiten Seite des Fahrzeugblechs hin eingesteckt werden kann. Wird dann die Befestigungsschraube gedreht oder angezogen, wird das Gegenelement mitgedreht, bis es nach einer Rotation in dem besagten Winkelbereich an einem Anschlag anschlägt und an einer weiteren Rotation gehindert ist. Damit steht das Gegenelement aber mit seiner Längsabmessung derart quer oder schräg bezüglich der Montageöffnung, dass das Gegenelement nicht mehr der Montageöffnung passt (wegen der geringeren Querabmessung) und damit kann damit einen Formschluss mit den Rändern der Montageöffnung, d.h. mit dem Fahrzeugblech, bilden. Somit ist durch Einstecken des Montagefortsatzes und Anziehen der Befestigungsschraube die Befestigung des Geräts am Fahrzeugblech durchführbar. Dies vereinfacht den Montagevorgang.

Eine Weiterbildung umfasst, dass das Stützelement auf einer an der Gehäusewandung ausgebildeten Rippenstruktur aufliegt. An der Gehäusewandung kann also eine Rippenstruktur oder können erhabene Strukturen, beispielsweise Stege, ausgebildet sein, auf denen das Stützelement aufliegen kann. Durch die Form der Rippenstruktur kann die vom Stützelement auf das Fahrzeugblech zu übertragende Kraft geführt werden. Die Rippenstruktur stellt zudem eine im Vergleich zu einem die Rippenstruktur umgebenden Bereich der Gehäusewandung Verdickung derselben dar, sodass durch Ausbilden der Rippenstruktur die Stabilität oder Druckfestigkeit der Gehäusewandung eingestellt werden kann. Insbesondere ist vorgesehen, mittels der Rippenstruktur Fortsätze an der Gehäusewandung auszubilden, die über einen Rand des Stützelements hinaus ragen, also breiter oder mit einem größerer Außenabmessung als das Stützelement, ausgestaltet sind. Hierdurch kann die Kraftverteilung ausgehend vom Stützelement in die Gehäusewandung auf eine Fläche größer als die Fläche, die das Stützelement selbst abdeckt, verteilt werden.

Eine Weiterbildung umfasst, dass das Gerät als Dachantennenmodul ausgestaltet ist und das Fahrzeugblech ein Fahrzeugdach des Kraftfahrzeugs ist. Insbesondere bei einem Fahrzeugdach hat es sich als günstig erwiesen, dort angebrachte Geräte, insbesondere eine Dachantenne, mit der beschriebenen Befestigungsanordnung zu halten oder zu befestigen. Insbesondere weist das Gerät in diesem Fall die beschriebene Leiterplatte auf, die mittels der Befestigungsschraube in dem Gerätegehäuse gehalten ist. In dem Dachantennenmodul kann z.B. ein Verstärker und/oder ein Filter und/oder ein Sperrkreis für eine Antenne bereitgestellt sein.

Als eine weitere Lösung umfasst die Erfindung ein Kraftfahrzeug mit einem an einem Fahrzeugblech des Kraftfahrzeugs befestigten Gerät, wobei das Gerät mittels einer Befestigungsanordnung nach einem der vorhergehenden Ansprüche befestigt ist. Mit anderen Worten ist also auch ein Kraftfahrzeug vorgesehen, das beispielsweise als Personenkraftwagen oder Lastkraftwagen oder als Personenbus ausgestaltet sein kann. Das Kraftfahrzeug lässt sich zuverlässig produzieren, da das Gerät am Fahrzeugblech mit geringem Mehraufwand mittels der Befestigungsschraube und dem Gegenelement gehalten werden kann, ohne dass es hierdurch zu einer Verformung oder Beschädigung des Gehäuses des Geräts und/oder einer Leiterplatte kommt.

Als eine weitere Lösung umfasst die Erfindung ein Gerät, insbesondere ein Dachantennenmodul, mit einem Gerätegehäuse und einem daran angeordneten Montagefortsatz zum Durchstecken durch eine Montageöffnung eines Fahrzeugblechs eines Kraftfahrzeugs entlang einer Einsteckrichtung, wobei eine aus dem Gerätegehäuse in den Montagefortsatz ragende Befestigungsschraube mit einem in dem Montagefortsatz angeordneten Gegenelement über ein Gewinde verbunden ist. In dem Gerätegehäuse ist ein Stützelement bereitgestellt, das entlang zumindest einer Raumrichtung senkrecht zur Einsteckrichtung eine Außenabmessung aufweist, die größer ist als ein eine Außenabmessung des Montagefortsatzes in derselben Raumrichtung, und/oder das entlang zumindest einer Raumrichtung quer oder senkrecht zur Einsteckrichtung eine Außenabmessung aufweist, die gleich oder größer ist als eine Querabmessung des Montagefortsatzes und/oder als eine Längserstreckung des Gegenelements. Das Gerät kann in der Weise für die Montage vorbereitet werden, dass im Montagefortsatz bereits das Gegenelement bereitgestellt ist und die Befestigungsschraube bereits aus dem Gerätegehäuse in den Montagefortsatz zum Gegenelement ragt. Durch Einstecken des Montagefortsatzes in eine Montageöffnung in einem Fahrzeugblech eines Kraftfahrzeugs und Anziehen oder Drehen der Befestigungsschraube kann das Gerät an dem Fahrzeugblech befestigt werden, ohne dass das Gerätegehäuse und/oder eine mittels der Befestigungsschraube gehaltene Leiterplatte aufgrund eines Drehmoments beim Anziehen der Befestigungsschraube beschädigt wird. Das Drehmoment ist hierbei natürlich begrenzt, beispielsweise auf weniger als 6 Nm, insbesondere weniger als 5 Nm, kann aber insbesondere größer als 3 Nm sein. Der Montagefortsatz kann beispielsweise als Käfig oder durch Seitenwandungen gebildet sein und zum Halten des Gegenelements während der Montage (vor dem Anziehen der Befestigungsschraube) ausgestaltet sein. Hier kann der Fachmann eine entsprechend bekannte Lösung nutzen.

Zu der Erfindung gehören auch Weiterbildungen des erfindungsgemäßen Geräts und des erfindungsgemäßen Kraftfahrzeugs, die Merkmale aufweisen, wie sie bereits im Zusammenhang mit den Weiterbildungen der erfindungsgemäßen Befestigungsanordnung beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung eines Schnitts eines Teils einer Ausführungsform des erfindungsgemäßen Kraftfahrzeugs;
- Fig. 2: eine schematische Darstellung einer Explosionsansicht einer Ausführungsform des erfindungsgemäßen Geräts;
- Fig. 3: eine schematische Darstellung des Geräts von Fig. 2 in montiertem Zustand;
- Fig. 4: eine schematische Darstellung eines Stützelements mit Formkodierung;
- Fig. 5: eine schematische Darstellung des Stützelements mit einer Krümmung;
- Fig. 6: eine schematische Darstellung einer Explosionsansicht einer weiteren Ausführungsform des erfindungsgemäßen Geräts;
- Fig. 7: eine schematische Darstellung des Geräts von Fig. 6 in montiertem Zustand;
- Fig. 8: eine schematische Darstellung einer Schnittansicht eines Montagefortsatzes mit einem Gegenelement, das mit Dornen in ein Fahrzeugblech gedrückt wird;
- Fig. 9: eine schematische Darstellung des Stützelements von Fig. 8 in montiertem Zustand mit einer Veranschaulichung eines Kraftflusses;
- Fig. 10: eine schematische Darstellung des Gegenelements in einer Montagestellung und einer Haltestellung, zwischen denen durch Anziehen einer Befestigungsschraube gewechselt wird.
- Fig. 11: eine schematische Darstellung eines Stützelements mit Laschen und Kragen.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

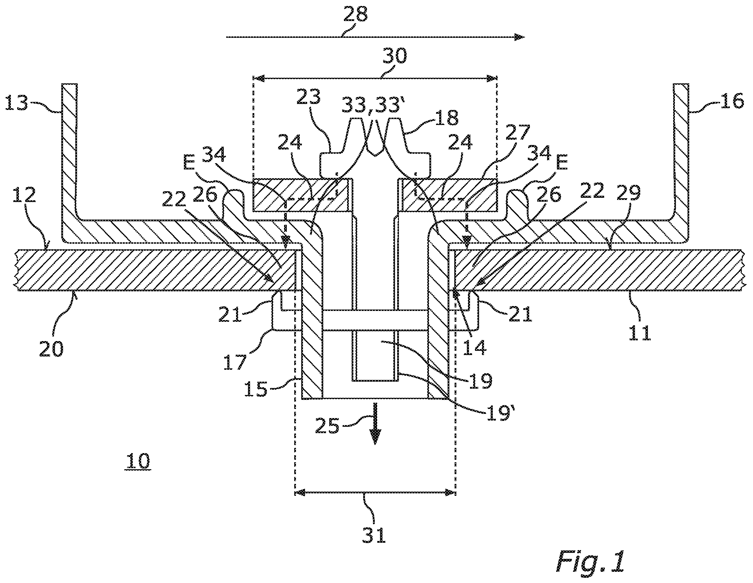

Fig. 1 zeigt von einem Kraftfahrzeug 10 ein Fahrzeugblech 11, bei dem es sich beispielsweise um ein Fahrzeugdach des Kraftfahrzeugs 10 handeln kann. An dem Fahrzeugblech 11 kann an einer ersten Seite 12 oder Außenseite ein Modul oder Gerät 13 montiert sein, bei dem es sich beispielsweise um eine Antennenschaltung oder Antenne des Kraftfahrzeugs 10 handeln kann. Zum Befestigen des Geräts 13 an dem Fahrzeugblech 11 weist das Fahrzeugblech 11 eine Montageöffnung 14 auf, durch welche hindurch ein Montagefortsatz 15 des Geräts 13 gesteckt sein kann. Der Montagefortsatz 15 kann an einem Gerätegehäuse 16 des Geräts 13 ausgeformt oder befestigt sein. In dem Montagefortsatz 15 kann ein Gegenelement 17 angeordnet sein, beispielsweise eine Platte oder Scheibe aus Metall. In dem Gerät 13 kann eine Befestigungsschraube 18 bereitgestellt sein, die durch Anziehen oder Drehen über ein in einem Schraubenbolzen oder Schraubenschaft 19 eingebrachtes Gewinde 19' das Gegenelement 17 gegen eine zweite Seite 20 oder Innenseite des Fahrzeugblechs 11 gezogen haben kann, wodurch das Gerät 13 über die Befestigungsschraube 18 und das Gegenelement 17 mit dem Fahrzeugblech 11 verspannt oder befestigt ist. Dargestellt ist, wie das Gegenelement 17 Dornen 21 aufweisen kann, die beim Drehen oder Anziehen der Befestigungsschraube 18 an einer jeweiligen Einstichstelle 22 in das Fahrzeugblech 11 gedrückt worden sein können. Durch das Anziehen der Befestigungsschraube 18 kann ein Schraubenkopf 23 eine Anpresskraft oder einen Anpressdruck oder allgemein eine Kraft 24 auf das Gerätegehäuse 16 ausüben. Damit ein Material des Gehäuses 16 die Kraft 24 nicht quer zu einer Einsteckrichtung 25 des Montagefortsatzes 15 zu einem Rand 26 der Montageöffnung 14 übertragen muss, kann ein Stützelement 27 vorgesehen sein, welches in zumindest eine Querrichtung 28 quer oder senkrecht zur Einsteckrichtung 25 und damit parallel zu einer Blechoberfläche 29 des Fahrzeugblechs 11 eine Abmessung 30 aufweisen kann, die größer als ein Innendurchmesser 31 der Montageöffnung 14 ist. Damit ragt also das Stützelement 27 zumindest entlang der Querrichtung 28, bevorzugt rundum um die Montageöffnung, über die Montageöffnung 14 hinaus. Das Stützelement 27 liegt somit auf dem jeweiligen Rand 26 der Montageöffnung 14 auf dem Fahrzeugblech 11 indirekt über eine Gehäusewandung 33 aus einem Material 33' des Gerätegehäuses 16 auf. Fig. 1 veranschaulicht, wie hierdurch die Kraft 24 in einem Kraftfluss 34 vom Schraubenkopf 23 über das Stützelement 27 auf das Fahrzeugblech 11 übertragen werden kann. Auf das Material 33' des Gerätegehäuses 16 wirkt dabei lediglich eine Druckkraft, wobei das Material 33' im Bereich des Kraftflusses 34 zwischen dem Stützelement 27 einerseits und dem Fahrzeugblech 11 andererseits gehalten oder gestützt ist, sodass eine Verformung oder ein Durchbiegen des Gerätegehäuses 16 aufgrund der Kraft 24 vermieden oder zumindest verringert ist im Vergleich zu einem Gerätegehäuse, das anstelle eines Stützelements 27 lediglich das Material 33 des Gerätegehäuses 16 zum Übertragen der Kraft 24 vom Schraubenkopf 23 hin zum Fahrzeugblech 11 nutzen würde.

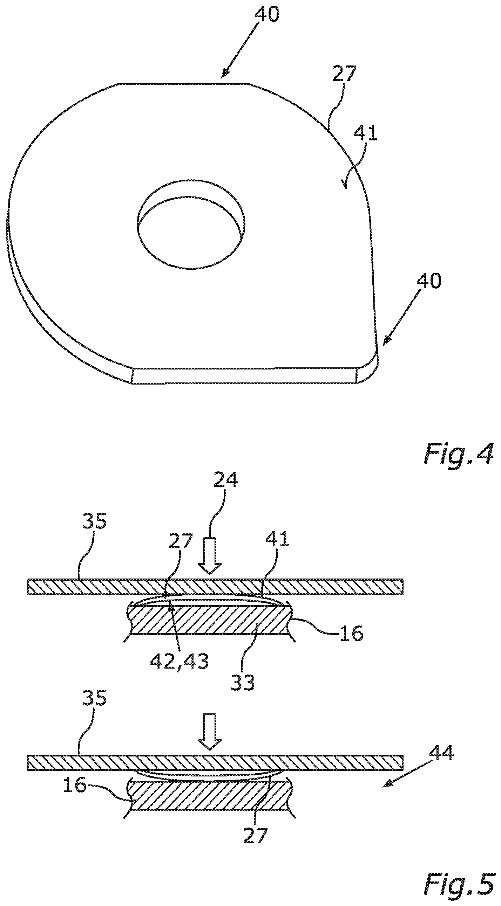

In dem Gerätegehäuse 16 kann eine Einfassungseinrichtung E ausgeformt oder bereitgestellt sein, in welche das Stützelement 27 eingelegt sein kann. Wie im Weiteren noch erläutert werden wird (siehe Fig. 4) kann durch eine Formkodierung erreicht werden, dass eine Lage oder Anordnung des Stützelements 27 in der Einfassungseinrichtung E eindeutig erzwungen werden kann.

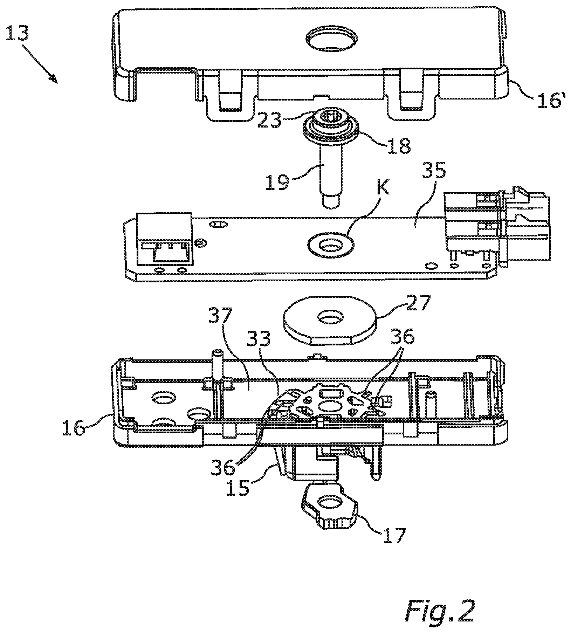

Fig. 2 zeigt eine Ausführungsform des Geräts 13, bei welcher durch die Befestigungsschraube 18 zusätzlich eine Leiterplatte 35 mittels der Befestigungsschraube 18 in dem Gerätegehäuse 16 gehalten sein kann. Zu dem Gerätegehäuse 16 kann zusätzlich ein Gehäusedeckel 16' gehören, der aber im

Zusammenhang mit der hier beschriebenen Funktionsweise nicht erläutert werden muss. Die Leiterplatte 35 kann beispielsweise einen elektrischen Kontaktbereich K aufweisen, auf welchem der Schraubenkopf 23 aufliegen kann, sodass sich eine elektrische Verbindung zwischen dem Kontaktbereich K und der Befestigungsschraube 18 ergibt. Der Kontaktbereich K kann durch eine Kupferschicht oder Aluminiumschicht der Leiterplatte gebildet sein. Über die Befestigungsschraube 18 und das Gegenelement 17 und dessen im Zusammenhang mit Fig. 1 beschriebene Dornen 21 kann somit eine elektrische Verbindung an den Einstichstellen 22 zum Fahrzeugblech 11 (in Fig. 1 nicht dargestellt) geschaffen werden. Das Gegenelement 17 kann aus einem elektrisch leitfähigem Material (elektrische Leitfähigkeit insbesondere mindestens 10 000 S/m), insbesondere einem Metall, beispielsweise Stahl, gefertigt sein. Auch das Stützelement 27 kann aus einem Metall, insbesondere Stahl, gefertigt sein. Das Gerätegehäuse 16 kann aus einem Kunststoff, beispielsweise einem Polycarbonat, gefertigt sein.

In der Gehäusewandung 33 eine Rippenstruktur 36 ausgestaltet oder bereitgestellt sein kann, auf welcher das Stützelement 27 aufgelegt sein kann. Die Rippenstruktur kann eine erhabene Struktur oder Anformung sein, die eine umgebende Oberfläche der Gehäusewandung überragt oder von dieser absteht. Durch die Rippenstruktur 36 kann zum einen eine Materialdicke der Gehäusewandung 33 im Bereich der Auflagefläche des Stützelements 27 auf der Gehäusewandung 33 verdickt sein im Vergleich zu einem Umgebungsbereich 37. Zusätzlich oder alternativ kann vorgesehen sein, über die Rippenstruktur 36 die auf die Gehäusewandung 33 wirkende Kraft 24 aus dem Stützelement 27 auf einen Bereich am Rand des Stützelements 27 auszuweiten oder zu verteilen, sodass die Kraft 24 auch über einen Rand des Stützelements 27 hinaus auf die Gehäusewandung 33 wirken kann.

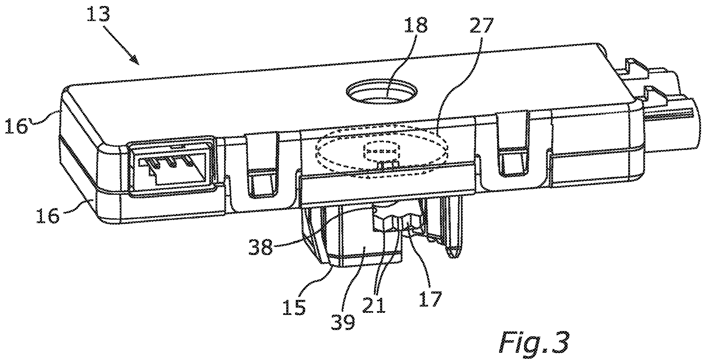

Fig. 3 veranschaulicht das Gerät 13 in montiertem Zustand, in welchem das Gegenelement 17 durch die Befestigungsschraube 18 gegen das (in Fig. 3 nicht dargestellte) Fahrzeugblech 11 gezogen ist und Dornen 21 an den Einstichstellen 22 in das Fahrzeugblech 11 gedrückt sind. Das Gegenelement 17 kann hierbei an einem mechanischen Anschlag 38 anliegen, welcher eine Drehbewegung des Gegenelements 17 beim Drehen oder Anziehen der Befestigungsschraube 18 blockiert, wobei das Gegenelement 17 aus einer Seitenwandung 39 des Montagefortsatzes 15 herausragt und damit einen Formschluss in Bezug auf die Montageöffnung 14 im Fahrzeugblech 11 darstellt.

Fig. 4 zeigt eine Ausführungsform des Stützelements 27 mit einer Formkodierung 40, wodurch eine Rotationssymmetrie des Stützelements 27 verhindert ist. Insbesondere ist durch die Formkodierung 40 vermieden, dass das Stützelement 27 in der Einfassungseinrichtung E einer Oberseite 41 nach unten, also verkehrt herum, eingelegt werden kann.

Fig. 5 veranschaulicht, wie mittels der Formkodierung 40 (siehe Fig. 4) erreicht werden kann, dass eine Krümmung 42 des Stützelements 27 derart ausgerichtet ist, dass durch das Stützelement 27 der Effekt einer Tellerfeder in Bezug auf die Übertragung der Kraft 24 auf die Gehäusewandung 33 des Gehäuses 16 erfolgt, das heißt, die durch die Krümmung bewirkte Wölbung 43 ist vom Fahrzeugblech 11 oder dessen Blechoberfläche weg ausgerichtet. Fig. 5 veranschaulicht zur Klarstellung noch eine Falschanordnung 44, bei welcher die Krümmung zum Fahrzeugblech 11 hin ausgerichtet ist, sodass die Kraft 24 ohne den Effekt einer Tellerfeder auf das Gerätegehäuse 16 wirkt.

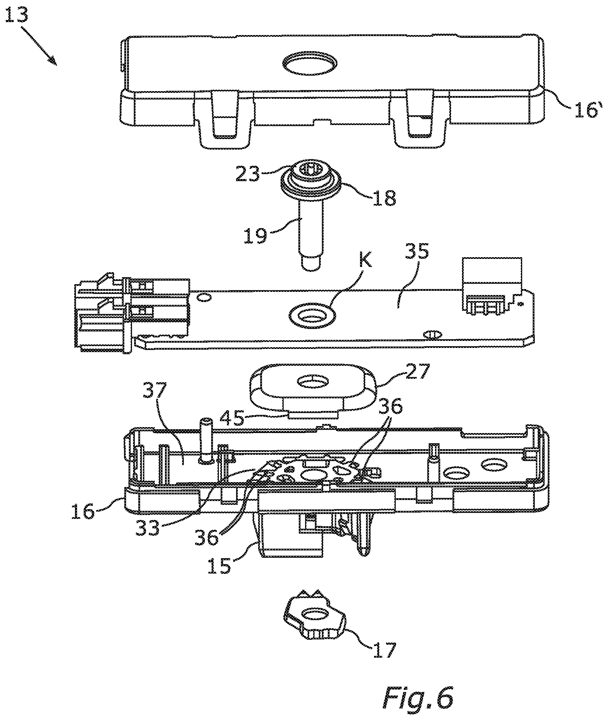

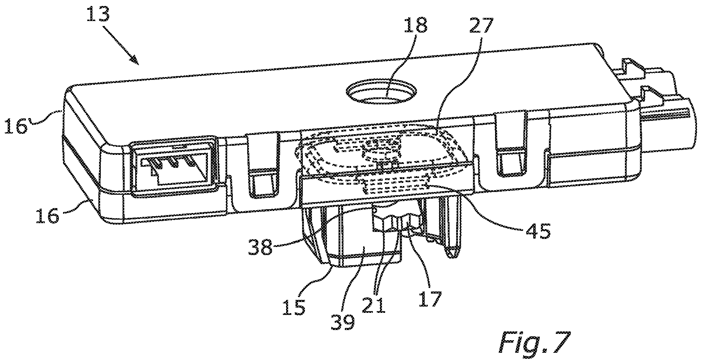

Fig. 6 veranschaulicht eine alternative Ausgestaltung des Geräts 13, bei welcher das Stützelement 27 eine oder mehrere Laschen 45 aufweisen kann, über welche das Stützelement 27 unmittelbar auf dem Fahrzeugblech oder der Blechoberfläche 29 aufliegen kann. Fig. 7 veranschaulicht die entsprechende Anordnung korrespondierend zu Fig. 3 für das Stützelement 27 mit der Lasche oder den mehreren Laschen 45.

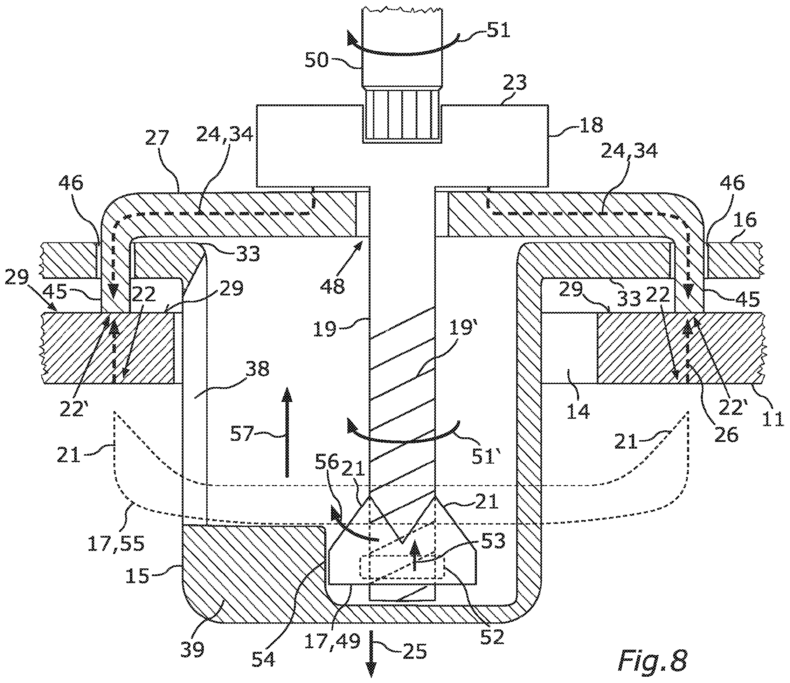

Fig. 8 veranschaulicht, wie mittels der Lasche 45 die Kraft 24 in einem Kraftfluss 34 vom Schraubenkopf 23 innerhalb des Stützelements 27 bis zum Fahrzeugblech 11 übertragen werden kann. Hierzu kann die zumindest eine Lasche 45 durch einen jeweiligen Schlitz 46 in der Gehäusewandung 33 hindurchgesteckt sein, sodass die jeweilige Lasche 45 auf der Blechoberfläche 29 des Fahrzeugblechs 11 aufliegt. Damit kann das Stützelement 27 unmittelbar auf dem Fahrzeugblech 11 aufliegen.

Der Schraubenschaft 19 kann durch eine Durchgangsöffnung 48 im Stützelement 27 gesteckt sein.

Fig. 8 veranschaulicht des Weiteren, wie in dem Montagefortsatz 15 das Gegenelement 17 während der Montage oder des Einsteckens des Montagefortsatzes 15 durch die Montageöffnung 14 entlang der Einsteckrichtung 25 hindurch in einer Montagestellung 49 positioniert sein kann. Wird dann während der Montage mittels eines Werkzeugs 50 das Anziehen 51 oder Drehen der Befestigungsschraube 18 bewirkt, so kann durch das Gewinde 19' des Schraubenschaft 19 über ein Gewinde 52 des Gegenelements 17 eine Zugskraft 53 auf das Gegenelement 17 ausgeübt werden. Das Gegenelement 17 kann gegen eine Rotation durch eine Kante 54 gestützt sein, wobei sich aber beim weiteren Rotieren 51' durch das Gewinde 19' und die Zugskraft 53 eine Bewegung des Gegenelements 17 hin zur Montageöffnung 14 ergibt. Hierbei wird das Gegenelement 17 an dem Schraubenschaft 19 entlang bewegt. Ist dann das Gegenelement 17 an der Kante 54 vorbeibewegt, so kann das Gegenelement 17 von der Montagestellung 49 in eine Haltestellung 55 durch eine Rotationsbewegung 56 wechseln, wo es dann an dem beschriebenen Anschlag 38 anschlägt und keine weitere Rotationsbewegung 56 beim Anziehen 51 oder beim weiteren Anziehen der Befestigungsschraube 18 ausführt. Somit steht das Gegenelement 17 "auf quer" und ragt aus der Seitenwandung 39 des Montagefortsatzes 15 heraus. Beim weiteren Anziehen 51 ergibt sich eine weitere Bewegung 57 auf das Fahrzeugblech 11 durch das Gegenelement 17, bis die Einstichstellen 22 erreicht sind, an welchen die Dornen 21 beim weiteren Anziehen 51 in das Fahrzeugblech 11 einstechen oder eingedrückt werden.

Die Einstichstellen 22 sind insbesondere gegenüber einem Auflagebereich 22' der jeweiligen Lasche 45 auf der Blechoberfläche 29 des Fahrzeugblechs 11. Mit anderen Worten sind sich die Einstichstellen 22 und ein jeweiliger Auflagebereich 22' auf den beiden Seiten 12, 20 des Fahrzeugblechs 11 gegenüber angeordnet.

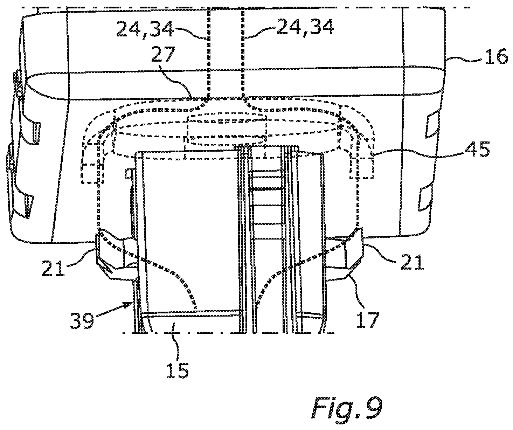

Fig. 9 veranschaulicht eine Ausführungsform des Stützelements 27 mit den beschriebenen Laschen 45. Zusätzlich oder alternativ dazu kann ein Kragen 60 an einem Rand oder einer Kante 61 des Stützelements ausgeformt oder ausgestaltet sein. Beispielsweise kann der Kragen 60 durch Tiefziehen einer Platte, aus welcher das Stützelement 27 zu formen ist, gebildet sein. Der Kragen 60 ist insbesondere umlaufend. Durch den Kragen 60 kann in vorteilhafterweise eine Biegesteifigkeit eingestellt, vorgegeben oder gesteigert werden.

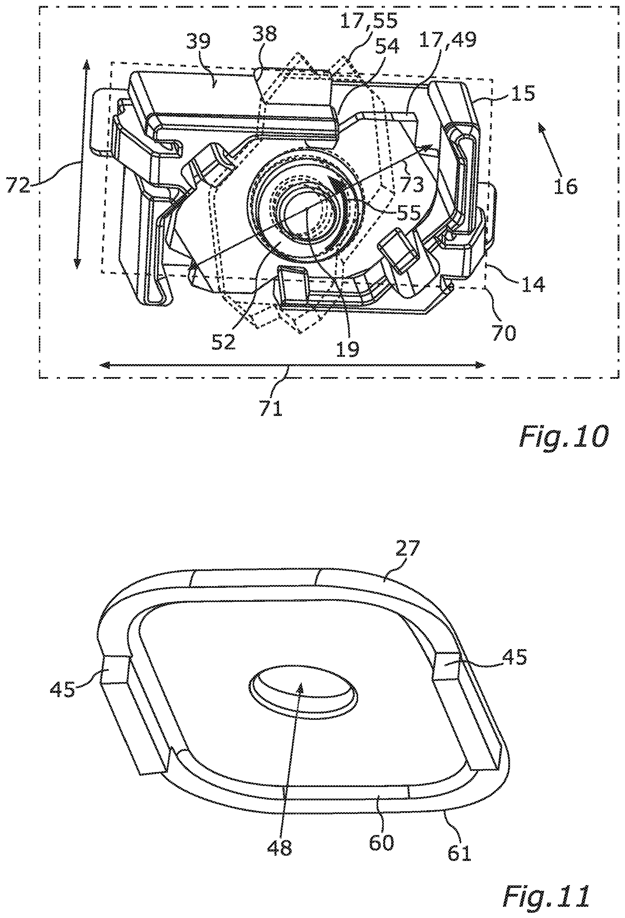

Fig. 10 zeigt noch einmal aus einer anderen Perspektive die Montagestellung 49 und die Haltestellung 55 des Gegenelements 17 im Montagefortsatz 15.

Dargestellt ist, wie die Montageöffnung 14 eine längliche Form 70 aufweisen kann, bei welcher eine Längsabmessung 71 größer ist als eine Querabmessung 72. Die Form 70 kann beispielsweise eine Rechteckform sein. Eine Längserstreckung 73 des Gegenelements 17 kann kleiner als die Längsabmessung 71 oder eine Diagonale der Montageöffnung 14 und größer als die Querabmessung 17 sein. In der Haltestellung 55 kann das Gegenelement 17 mit seiner Längserstreckung 73 parallel zur Querabmessung 72 ausgerichtet sein. Damit kann in der Haltestellung 55 das Gegenelement 17 nicht mehr entgegen der Einsteckrichtung 25 aus der Montageöffnung 14 herausgezogen werden, und es ergibt sich der beschriebene Formschluss zwischen Gegenelement 17 und dem Fahrzeugblech 11. Dagegen kann in der Montagestellung 49 die Längserstreckung 73 derart ausgerichtet sein, dass sich das Gegenelement 17 im Montagefortsatz 15 durch die Montageöffnung 14 stecken lässt. Der Wechsel von der Montagestellung 49 in die Haltestellung 55 ergibt sich durch das beschriebene Rotieren 51' um beispielsweise 45° oder 90° oder allgemein im Bereich zwischen 40° und 140°.

Es wird somit ein bevorzugt metallisches Stützelement unter die PCBA zur Verteilung der durch die Befestigungsschraube eingeleiteten Kraft eingebracht. Dadurch wird die Kraft auf eine größere Fläche verteilt und eine lokale Durchbiegung von PCB und Gerätegehäuse vermieden/reduziert. Diese Maßnahme Ist speziell bei Befestigungen (indirekte Verschraubung) mit großen Montageöffnungen in der Fahrzeugkarosserie und großen Anziehdrehmomenten erforderlich.

Eine alternative Lösung ist das Einbringen dieses Stützelements über der PCBA, direkt unter dem Schraubkopf, oder eine entsprechende Vergrößerung des Schraubkopfes selbst (z.B. als angeformte Scheibe oder als angepresste Scheibe). Die Idee ist verwendbar für angeschraubte Gehäuse mit und ohne PCBA aus Kunststoff, bei denen die zulässige Spannung überschritten würde.

Bei Montage für andere Komponenten können nun 4Nm (400kg) Akku-Schrauber verwendet werden, was nicht mehr die Gefahr birgt, dass es Leiterplatte und/oder Kunststoffgehäuseteil (Käfig) des Antennenmoduls in die Dachöffnung hinein zieht und deformiert (Problem bei mehr als 4Nm also 400kg).

Ein Stützelement verringert eine Verformung des Gehäuses. Es ragt hierzu insbesondere (zumindest in einer Dimension) seitlich über die Kfz-Dach-Montageöffnung hinaus und ist ausgeformt als:
- Beilagscheiben-ähnliches Element, d.h. als Platte oder Scheibe (bevorzugte Lösung)
- Ansatz für den Schraubenkopf größer als die Montageöffnung
- Aufsatz mit seitlichen umgebogenen Laschen, die sich bei Druck in Schlitze (z.B. im Kunststoffgehäuseteil oder Käfig) drücken und die direkt am Fahrzeugblech aufliegen könnten, um den Andruck dorthin weiterzugeben (siehe Fig. 8), als Beilagscheibe oder großer Schraubenkopf oder Zwischenteil.

Insgesamt zeigt das Beispiel, wie ein Stützelement für die Verteilung eines Anpressdrucks eines Schraubenkopfes auf eine Gehäusewandung und ein PCB bereitgestellt werden kann.

### Bezugszeichenliste

- 10: Kraftfahrzeug
- 11: Fahrzeugblech
- 12: Erste Seite
- 13: Gerät
- 14: Montageöffnung
- 15: Montagefortsatz
- 16: Gehäusedeckel
- 16: Gerätegehäuse
- 17: Gegenelement
- 17: Querabmessung
- 19: Gewinde
- 19: Schraubenschaft
- 20: Zweite Seite
- 21: Dornen
- 22: Einstichstelle
- 23: Schraubenkopf
- 24: Kraft
- 25: Einsteckrichtung
- 26: Rand
- 27: Stützelement
- 28: Querrichtung
- 29: Blechoberfläche
- 30: Abmessung
- 31: Innendurchmesser
- 33: Gehäusewandung
- 33': Material
- 34: Kraftfluss
- 35: Leiterplatte
- 36: Rippenstruktur
- 37: Umgebungsbereich
- 38: Anschlag
- 39: Seitenwandung
- 40: Formkodierung
- 41: Oberseite
- 42: Krümmung
- 43: Wölbung
- 44: Falschanordnung
- 45: Lasche
- 46: Schlitz
- 48: Durchgangsöffnung
- 49: Montagestellung
- 50: Werkzeugs
- 51: Anziehen
- 52: Gewinde
- 53: Zugkraft
- 54: Kante
- 55: Haltestellung
- 56: Rotationsbewegung
- 57: Bewegung
- 60: Kragen
- 61: Kante
- 70: Form
- 71: Längsabmessung
- 72: Querabmessung
- 73: Längserstreckung

## Patentansprüche

1. Befestigungsanordnung eines Gerätegehäuses (16) eines Geräts (13) an einem Fahrzeugblech (11) eines Kraftfahrzeugs (10), wobei ein Gerätegehäuse (16) auf einer ersten Seite (12) des Fahrzeugblechs (11) anliegt und ein Montagefortsatz (15) des Geräts (13) durch eine Montageöffnung (14) des Fahrzeugblechs (11) eingesteckt ist und eine aus dem Gerätegehäuse (16) in den Montagefortsatz (15) hineinragende Befestigungsschraube (18) angezogen ist und hierdurch ein in dem Montagefortsatz (15) angeordnetes Gegenelement (17) gegen eine der ersten Seite (12) gegenüberliegende zweite Seite (20) des Fahrzeugblechs (11) zieht,
**dadurch gekennzeichnet , dass** in dem Gerätegehäuse (16) ein Stützelement (27) bereitgestellt ist, das entlang zumindest einer Raumrichtung (28) parallel zu einer Blechoberfläche (29) des Fahrzeugblechs (11) eine Außenabmessung (30) aufweist, die größer als ein Innendurchmesser (31) der Montageöffnung (14) oder gleich dem Innendurchmesser (31) oder um höchstens 20 Prozent kleiner als der Innendurchmesser (31) in derselben Raumrichtung (28) ist, und damit das Stützelement (27) eine von einem Schraubenkopf (23) der Befestigungsschraube (18) durch das Anziehen (51) ausgeübte Kraft (24) über das Stützelement (27) durch eine Gehäusewandung (33) des Gerätegehäuses (16) hindurch auf das Fahrzeugblech (11) überträgt, wobei das Stützelement (27) eine Krümmung (42) aufweist und das Stützelement (27) eine Formkodierung (40) aufweist, die zu einer Form (70) einer Einfassungseinrichtung (E) des Gerätegehäuses (16) korrespondiert, in welcher das Stützelement (27) eingelegt ist, und eine durch die Krümmung (42) bewirkte Wölbung (43) des Stützelements (27) von dem Fahrzeugblech (11) weg weist.

2. Befestigungsanordnung nach dem vorherigen Anspruch, wobei das Stützelement (27) aus einem Material (33') gefertigt ist, das härter und/oder steifer als ein Material (33') der Gehäusewandung (33) ist, wobei das Stützelement (27) zwischen dem Schraubenkopf (23) und der Gehäusewandung (33) angeordnet ist und hierzu eine Durchgangsöffnung aufweist, durch welche hindurch ein Schraubenschaft (19) der Befestigungsschraube (18) gesteckt ist.

3. Befestigungsanordnung nach einem der vorhergehenden Ansprüche, wobei an dem Gegenelement (17) zumindest ein Dorn (21) ausgebildet ist, der auf der zweiten Seite (20) des Fahrzeugblechs (11) an einer jeweiligen Einstichstelle (22) in einen Lack des Fahrzeugblechs (11) und/oder in ein Metall des Fahrzeugblechs (11) hineingedrückt ist, wobei das Stützelement (27) sich auf der ersten Seite (12) des Fahrzeugblechs (11) gegenüber der jeweiligen Einstichstelle (22) erstreckt und damit das Fahrzeugblech (11) an der jeweiligen Einstichstelle (22) stützt.

4. Befestigungsanordnung nach einem der vorhergehenden Ansprüche, wobei an zumindest einer Kante (61) des Stützelements (27) eine Lasche (45) ausgebildet ist, die durch einen jeweiligen Schlitz (46) in der Gehäusewandung (33) gesteckt ist und unmittelbar auf dem Fahrzeugblech (11) aufliegt.

5. Befestigungsanordnung nach einem der vorhergehenden Ansprüche, wobei an zumindest einer Kante (61) des Stützelements (27) ein Kragen (60) ausgebildet ist, der durch Umbiegen eines Rands des Stützelements (27) gebildet ist.

6. Befestigungsanordnung nach einem der vorhergehenden Ansprüche, wobei das Stützelement (27) am Schraubenkopf (23) befestigt ist.

7. Befestigungsanordnung nach einem der vorhergehenden Ansprüche, wobei durch den Schraubenkopf (23) und/oder durch das Stützelement (27) eine Leiterplatte (35), PCB, einer elektrischen Schaltung des Geräts (13) in dem Gerätegehäuse (16) gehalten ist.

8. Befestigungsanordnung nach einem der vorhergehenden Ansprüche, wobei die Montageöffnung (14) und/oder der Montagefortsatz (15) ein längliche Form (70) mit einer Längsabmessung (71) und einer bezüglich der Längsabmessung (71) kleineren Querabmessung (72) aufweist und das Gegenelement (17) kürzer als die Längsabmessung (71) oder eine Diagonale der länglichen Form (70) und länger als die Querabmessung (72) ist und in dem Montagefortsatz (15) um einen Rotationswinkel in einem Bereich von 40° bis 140° drehbar gelagert ist, wobei der Montagefortsatz (15) dazu eingerichtet ist, dass sich bei einer Montage des Geräts am Fahrzeugblech (11) eine Drehlage des Gegenelements (17) ausgehend von einer Montagestellung (49) durch Anziehen (51) der Befestigungsschraube (18) verändert, sodass ein Teil des Gegenelements (17) durch das Anziehen (51) seitlich aus Seitenwandungen (39) des Montagefortsatzes (15) heraus in eine Haltestellung (55) gedreht ist und an einem Anschlag (38) des Montagefortsatzes (15) anliegt.

9. Befestigungsanordnung nach einem der vorhergehenden Ansprüche, wobei das Stützelement (27) auf einer an der Gehäusewandung (33) ausgebildeten Rippenstruktur (36) aufliegt.

10. Befestigungsanordnung nach einem der vorhergehenden Ansprüche, wobei das Gerät (13) als Dachantennenmodul ausgestaltet ist und das Fahrzeugblech (11) ein Fahrzeugdach des Kraftfahrzeugs (10) ist.

11. Kraftfahrzeug (10) mit einem an einem Fahrzeugblech (11) des Kraftfahrzeugs (10) befestigten Gerät (13), wobei das Gerät (13) mittels einer Befestigungsanordnung nach einem der vorhergehenden Ansprüche befestigt ist.

## Claims

1. A fastening arrangement of a device housing (16) of a device (13) on a vehicle panel (11) of a motor vehicle (10), wherein a device housing (16) abuts on a first side (12) of the vehicle panel (11) and a mounting extension (15) of the device (13) is inserted through a mounting opening (14) of the vehicle panel (11), and a fastening screw (18) projecting from the device housing (16) into the mounting extension (15) is tightened and, as a result, pulls a counterpart member (17) disposed in the mounting extension (15) against a second side (20) of the vehicle panel (11) which is opposite the first side (12), **characterised in that** a supporting member (27) is provided in the device housing (16), which, along at least one spatial direction (28) parallel to a panel surface (29) of the vehicle panel (11), has an external dimension (30) which is larger than an internal diameter (31) of the mounting opening (14) or equal to the internal diameter (31) or smaller than the internal diameter (31) by at most 20 percent in the same spatial direction (28), and **in that** the supporting member (27) in this way transmits a force (24) exerted by the tightening (51) of a screw head (23) of the fastening screw (18) by way of the supporting member (27) through a housing wall (33) of the device housing (16) onto the vehicle panel (11), wherein the supporting member (27) has a curvature (42) and the supporting member (27) has a shape coding (40) which corresponds to a shape (70) of an enclosure means (E) of the device housing (16) in which the supporting member (27) is inserted, and a bulge (43) of the supporting member (27) caused by said curvature (42) faces away from the vehicle panel (11).

2. The fastening arrangement as claimed in the preceding claim, wherein the supporting member (27) is made of a material (33') that is harder and/or stiffer than a material (33') of the housing wall (33), wherein the supporting member (27) is disposed between the screw head (23) and the housing wall (33) and for this purpose has a through opening through which a screw shank (19) of the fastening screw (18) is inserted.

3. The fastening arrangement as claimed in any one of the preceding claims, wherein at least one spike (21) which, on the second side (20) of the vehicle panel (11), is pressed into a coat of paint of the vehicle panel (11) and/or into a metal of the vehicle panel (11) at a respective puncture site (22) is formed on the counterpart member (17), wherein the supporting member (27) extends opposite the respective puncture site (22) on the first side (12) of the vehicle panel (11) and in this way supports the vehicle panel (11) at the respective puncture site (22).

4. The fastening arrangement as claimed in any one of the preceding claims, wherein a tab (45) which is inserted through a respective slot (46) in the housing wall (33) and rests directly on the vehicle panel (11) is formed on at least one edge (61) of the supporting member (27).

5. The fastening arrangement as claimed in any one of the preceding claims, wherein a collar (60) which is created by bending a rim of the supporting member (27) is formed on at least one edge (61) of the supporting member (27).

6. The fastening arrangement as claimed in any one of the preceding claims, wherein the supporting member (27) is fastened to the screw head (23).

7. The fastening arrangement as claimed in any one of the preceding claims, wherein a printed circuit board (35), PCB, of an electric circuit of the device (13) is held in the device housing (16) by the screw head (23) and/or by the supporting member (27).

8. The fastening arrangement as claimed in any one of the preceding claims, wherein the mounting opening (14) and/or the mounting extension (15) have/has an elongate shape (70) with a longitudinal dimension (71) and a transverse dimension (72) smaller in relation to the longitudinal dimension (71), and the counterpart member (17) is shorter than the longitudinal dimension (71) or a diagonal of the elongate shape (70) and longer than the transverse dimension (72), and is rotatably mounted in the mounting extension (15) by a rotation angle in a range from 40° to 140°, wherein the mounting extension (15) is configured such that, when the device is mounted on the vehicle panel (11), a rotational position of the counterpart member (17), starting from a mounting position (49), changes by tightening (51) the fastening screw (18) such that part of the counterpart member (17) is rotated laterally out of lateral walls (39) of the mounting extension (15) into a holding position (55) by the tightening (51) and abuts on a stop (38) of the mounting extension (15).

9. The fastening arrangement as claimed in any one of the preceding claims, wherein the supporting member (27) rests on a rib structure (36) formed on the housing wall (33).

10. The fastening arrangement as claimed in any one of the preceding claims, wherein the device (13) is designed as a roof antenna module and the vehicle panel (11) is a vehicle roof of the motor vehicle (10).

11. A motor vehicle (10) having a device (13) fastened to a vehicle panel (11) of the motor vehicle (10), wherein the device (13) is fastened by means of a fastening arrangement as claimed in any one of the preceding claims.

## Revendications

1. Agencement de fixation d'un boîtier d'appareil (16) d'un appareil (13) sur une tôle de véhicule (11) d'un véhicule automobile (10), dans lequel un boîtier d'appareil (16) repose contre une première face (12) de la tôle de véhicule (11) et une extension de montage (15) de l'appareil (13) est insérée dans une ouverture de montage (14) de la tôle de véhicule (11), et une vis de fixation (18) faisant saillie depuis le boîtier d'appareil (16) dans l'extension de montage (15) est serrée et tire ainsi un contre-élément (17) disposé dans l'extension de montage (15) contre une seconde face (20) de la tôle de véhicule (11) opposée à l'une de la première face (12), **caractérisé en ce qu'**un élément de support (27) est prévu dans le boîtier d'appareil (16), lequel élément présente une dimension extérieure (30) le long d'au moins une direction spatiale (28) parallèle à une surface métallique (29) de la tôle de véhicule (11), laquelle dimension est plus grande qu'un diamètre intérieur (31) de l'ouverture de montage (14) ou égale au diamètre intérieur (31) ou au plus 20 pour cent plus petite que le diamètre intérieur (31) dans la même direction spatiale (28), et ainsi, l'élément de support (27) transmet une force (24) exercée par une tête de vis (23) de la vis de fixation (18) par serrage (51) par l'intermédiaire de l'élément de support (27) à travers une paroi de boîtier (33) du boîtier d'appareil (16) à la tôle de véhicule (11), dans lequel l'élément de support (27) présente une courbure (42) et l'élément de support (27) présente un codage de forme (40) qui correspond à une forme (70) d'un dispositif de bordure (E) du boîtier d'appareil (16) dans lequel l'élément de support (27) est inséré, et un renflement (43) de l'élément de support (27) causé par la courbure (42) pointe à l'opposé de la tôle de véhicule (11).

2. Agencement de fixation selon la revendication précédente, dans lequel l'élément de support (27) est fait d'un matériau (33') plus dur et/ou plus rigide qu'un matériau (33') de la paroi de boîtier (33), dans lequel l'élément de support (27) est disposé entre la tête de vis (23) et la paroi de boîtier (33) et présente une ouverture traversante à cet effet, à travers laquelle la tige de vis (19) de la vis de fixation (18) est insérée.

3. Agencement de fixation selon l'une quelconque des revendications précédentes, dans lequel au moins un mandrin (21) est formé sur le contre-élément (17), lequel mandrin est pressé dans une peinture de la tôle de véhicule (11) et/ou dans un métal de la tôle de véhicule (11) à un point d'insertion respectif (22) sur le second côté (20) de la tôle de véhicule (11), dans lequel l'élément de support (27) s'étend sur le premier côté (12) de la tôle de véhicule (11) opposé au point d'insertion respectif (22) et supporte ainsi la tôle de véhicule (11) au point d'insertion respectif (22).

4. Agencement de fixation selon l'une quelconque des revendications précédentes, dans lequel une languette (45) est formée sur au moins un bord (61) de l'élément de support (27), laquelle languette est insérée à travers une fente respective (46) dans la paroi de boîtier (33) et repose directement sur la tôle de véhicule (11).

5. Agencement de fixation selon l'une quelconque des revendications précédentes, dans lequel une collerette (60) est formée sur au moins un bord (61) de l'élément de support (27), laquelle collerette est formée par pliage d'un bord de l'élément de support (27).

6. Agencement de fixation selon l'une quelconque des revendications précédentes, dans lequel l'élément de support (27) est fixé à la tête de vis (23).

7. Agencement de fixation selon l'une quelconque des revendications précédentes, dans lequel une carte de circuits imprimés (35), PCB, d'un circuit électrique de l'appareil (13) est maintenue dans le boîtier d'appareil (16) par la tête de vis (23) et/ou par l'élément de support (27).

8. Agencement de fixation selon l'une quelconque des revendications précédentes, dans lequel l'ouverture de montage (14) et/ou l'extension de montage (15) présente une forme allongée (70) avec une dimension longitudinale (71) et une dimension transversale (72) plus petite que la dimension longitudinale (71), et le contre-élément (17) est plus court que la dimension longitudinale (71) ou une diagonale de la forme allongée (70) et est plus long que la dimension transversale (72) et est monté de manière rotative dans l'extension de montage (15) autour d'un angle de rotation compris entre 40° et 140°, dans lequel l'extension de montage (15) est configurée de sorte que, lorsque l'appareil est monté sur la tôle de véhicule (11), une position de rotation du contre-élément (17) change à partir d'une position de montage (49) par serrage (51) de la vis de fixation (18), de sorte qu'une partie du contre-élément (17) est tournée vers une position de maintien (55) latéralement par rapport aux parois latérales (39) de l'extension de montage (15) par le serrage (51), et repose contre une butée (38) de l'extension de montage (15).

9. Agencement de fixation selon l'une quelconque des revendications précédentes, dans lequel l'élément de support (27) repose sur une structure nervurée (36) formée sur la paroi de boîtier (33).

10. Agencement de fixation selon l'une quelconque des revendications précédentes, dans lequel l'appareil (13) est conçu comme un module d'antenne de pavillon et la tôle de véhicule (11) est un pavillon du véhicule automobile (10).

11. Véhicule automobile (10) avec un appareil (13) fixé à une tôle de véhicule (11) du véhicule automobile (10), dans lequel l'appareil (13) est fixé au moyen d'un système de fixation selon l'une quelconque des revendications précédentes.
